# EUROPEAN PATENT APPLICATION

(11) **EP 4 556 351 A1**
(43) Date of publication of application: **21.05.2025**
(21) Application number: 24211587.1
(22) Date of filing: 07.11.2024
(51) Int. Cl.: B62D 21/15, B62D 25/02, B62D 25/20

(54) **VEHICLE LOWER BODY STRUCTURE**

(30) Priority: 13.11.2023 JP 2023193260
(71) Applicant: TOYOTA JIDOSHA KABUSHIKI KAISHA, Aichi-ken, 471-8571 (JP)
(72) Inventor: SHIOTA, Yuzuru, TOYOTA-SHI, AICHI-KEN, 471-8571 (JP); ABE, Satoru, TOYOTA-SHI, AICHI-KEN, 471-8571 (JP); NURUKI, Tetsuo, TOYOTA-SHI, AICHI-KEN, 471-8571 (JP); ARAKAWA, Seiji, TOYOTA-SHI, AICHI-KEN, 471-8571 (JP); ENDO, Kazusa, TOYOTA-SHI, AICHI-KEN, 471-8571 (JP)
(74) Representative: Cabinet Beau de Loménie

(57) **Abstract**

A vehicle lower body structure includes: a pair of rockers (16) that extend in the vehicle front and rear direction on both outer sides in the vehicle width direction; a crossmember (34) that extends in the vehicle width direction between the pair of rockers and on the vehicle upper side of a battery (20) connected to the pair of rockers, with both end portions of the crossmember in the extension direction thereof being connected to the pair of rockers; and an impact absorption member (42) that is provided inside each of the pair of rockers, disposed so as to overlap the crossmember and the battery as viewed in a vehicle side view, and provided with first guide portions (48) that guide to the crossmember an impact load input from outside in the vehicle width direction.

## Description

### BACKGROUND

### Technical Field

The present disclosure relates to a vehicle lower body structure.

### Related Art

Japanese Patent Application Laid-open (JP-A) No. 2019-006303 discloses a technology relating to a vehicle lower body structure that enables a battery pack to be installed. This related art discloses a structure where an impact absorption member is provided inside rockers in a position overlapping the battery pack as viewed in a vehicle side view.

In the above related art, at the time of a side impact to the vehicle, at least some of the side impact load (impact load) is absorbed by the impact absorption member, but because the battery pack (hereinafter called "the battery") is provided on the vehicle width direction inner side of the impact absorption member, there is the potential for the load input to the battery to become larger.

In consideration of the above circumstances, it is an object of the present disclosure to obtain a vehicle lower body structure that can reduce the impact load input to the battery at the time of a side impact to the vehicle.

### SUMMARY

A vehicle lower body structure of a first aspect includes: a pair of rockers that extend in a vehicle front_ rear direction at both vehicle width direction outer sides; a crossmember that extends in a vehicle width direction between the pair of rockers and at a vehicle upper side of a battery connected to the pair of rockers, with extension direction end portions of the crossmember being respectively connected to the pair of rockers; and an impact absorption member that is provided inside each of the pair of rockers, that is disposed so as to overlap the crossmember and the battery as viewed in a vehicle side view, and that is provided with first guide portions that guide, to the crossmember an impact load input from a vehicle width direction outer side.

The vehicle lower body structure of the first aspect includes the pair of rockers, the crossmember, and the impact absorption member. The pair of rockers extend in the vehicle front-rear direction at both outer sides in the vehicle width direction. The crossmember extends in a vehicle width direction between the pair of rockers and on the vehicle upper side of the battery connected to the pair of rockers, and both end portions of the crossmember in the extension direction thereof are connected to the pair of rockers.

The impact absorption member is provided inside each of the pair of rockers and disposed so as to overlap the crossmember and the battery as viewed in a vehicle side view. For this reason, the impact load input from outside in the vehicle width direction is absorbed by the impact absorption member. Here, in the present disclosure, the impact absorption member is provided with the first guide portions, and the impact load can be guided (transmitted) by the first guide portions to the crossmember. In other words, in the present disclosure, the load transmission direction can be controlled.

Additionally, because the impact load is guided by the first guide portions to the crossmember provided on the vehicle upper side of the battery, in the present disclosure the impact load input to the battery becomes relatively smaller. It will be noted that "guide" here means that the rate of load transmission is large compared with other sites.

A vehicle lower body structure of a second aspect is the vehicle lower body structure of the first aspect, wherein the impact absorption member includes plural energy absorption portions that are arranged along a vehicle up-down direction and the vehicle width direction and that are configured to absorb impact energy by plastic deformation, and the first guide portions are configured by some of the energy absorption portions.

In the vehicle lower body structure of the second aspect, the impact absorption member includes the plural energy absorption portions that are arranged along the vehicle up-down direction and the vehicle width direction, and impact energy is absorbed by plastic deformation of the energy absorption portions. Here, the first guide portions are configured by some energy absorption portions of the plural energy absorption portions.

In other words, in the present disclosure, by enabling transmission of the impact load by for example making the rigidity of some energy absorption portions of the same energy absorption portions higher as the first guide portions than that of the other energy absorption portions, the transmission direction of the impact load can be more effectively controlled.

A vehicle lower body structure of a third aspect is the vehicle lower body structure of the second aspect, wherein cross-sectional shapes of the energy absorption portions when the energy absorption portions are cut along the vehicle width direction are closed cross-sectional shapes.

In the vehicle lower body structure of the third aspect, the cross-sectional shapes of the energy absorption portions when the energy absorption portions are cut along the vehicle width direction are closed cross-sectional shapes, a high rigidity can be obtained by the impact absorption member itself compared with a case where the cross-sectional shapes are open cross-sectional shapes, and the amount of impact energy absorbed by plastic deformation can be increased all the more.

A vehicle lower body structure of a fourth aspect is the vehicle lower body structure of the second aspect, wherein the energy absorption portions configuring the first guide portions have a higher rigidity than other energy absorption portions.

In the vehicle lower body structure of the fourth aspect, the energy absorption portions configuring the first guide portions have a higher rigidity than other energy absorption portions, so the transmission direction of the impact load can be controlled.

A vehicle lower body structure of a fifth aspect is the vehicle lower body structure of the first aspect, wherein the battery is fastened, via fastening members, to the pair of rockers, and the impact absorption member includes second guide portions that guide the impact load to the fastening members.

In the vehicle lower body structure of the fifth aspect, the battery is fastened (connected) via the fastening members to the rockers. The impact absorption member is configured to include the second guide portions, and the impact load input from outside in the vehicle width direction can be guided by the second guide portions to the fastening members.

The battery fastening members have a high rigidity, so the impact load is guided by the second guide portions to the fastening members, and thus in the present disclosure the impact load input to the battery can be reduced. Furthermore, the impact load is guided to the crossmember and is also guided to the fastening members, so the impact can be absorbed in a balanced fashion by the rocker overall, with the result that the yield strength of the rocker itself can be improved.

A vehicle lower body structure of a sixth aspect is the vehicle lower body structure of the fifth aspect, wherein energy absorption portions configuring the second guide portions have a higher rigidity than other energy absorption portions excluding energy absorption portions configuring the first guide portions.

In the vehicle lower body structure of the sixth aspect, the energy absorption portions configuring the second guide portions have a higher rigidity than other energy absorption portions excluding energy absorption portions configuring the first guide portions, so the transmission direction of the impact load can be controlled.

A vehicle lower body structure of a seventh aspect is the vehicle lower body structure of the second aspect, wherein among energy absorption portions configuring the first guide portions, an energy absorption portion provided at a vehicle width direction inner side is disposed further toward a vehicle upper side than an energy absorption portion provided at the vehicle width direction outer side.

In the vehicle lower body structure of the seventh aspect, of the energy absorption portions configuring the first guide portions, the energy absorption portion provided at the in the vehicle width direction inner side is disposed further toward the vehicle upper side than the energy absorption portion provided at the vehicle width direction outer side, so an impact load input from a vehicle width direction outer side of the battery (lower portion sides of the rockers) can be guided to the vehicle upper side of the battery (to the crossmember).

A vehicle lower body structure of an eighth aspect is the vehicle lower body structure of the second aspect, wherein among the first guide portions, at least some of the energy absorption portions that are adjacent to each other in the vehicle width direction overlap each other in the vehicle up-down direction.

In the vehicle lower body structure of the eighth aspect, among the first guide portions, at least some of the energy absorption portions that are adjacent to each other in the vehicle width direction overlap each other in the vehicle up-down direction, so the efficiency with which the impact load input along the vehicle width direction in the overlapping range is transmitted improves. For this reason, according to the present disclosure, the impact load can be more effectively transmitted.

A vehicle lower body structure of a ninth aspect is the vehicle lower body structure of the first aspect, wherein the first guide portions include a sloping portion that slopes towards a vehicle upper side and a vehicle width direction inner side.

In the vehicle lower body structure of the ninth aspect, the first guide portions include the sloping portion that slopes towards the vehicle upper side and the vehicle width direction inner side, and the impact load can be transmitted in the vehicle upward direction (to the crossmember) via the sloping portion. In this way, providing the sloping portion increases the flexibility of control over the load transmission direction (design flexibility).

A vehicle lower body structure of a tenth aspect is the vehicle lower body structure of the ninth aspect, wherein an outer end portion at a vehicle width direction outer side of the sloping portion is provided further toward the vehicle width direction outer side than fastening members fastened to the pair of rockers, and an inner end portion at a vehicle width direction inner side of the sloping portion is provided further toward the vehicle upper side than the fastening members.

In the vehicle lower body structure of the tenth aspect, the outer end portion of the sloping portion is provided further toward the vehicle width direction outer side than the members fastening the battery and the rockers to each other, and the inner end portion of the sloping portion is provided further toward the vehicle upper side than the fastening members, so the impact load can be kept from being transmitted inward in the vehicle width direction beyond the fastening members.

As described above, the vehicle lower body structure pertaining to the present disclosure can reduce the impact load input to the battery at the time of a side impact to the vehicle.

### BRIEF DESCRIPTION OF THE DRAWINGS

Exemplary embodiments of the present disclosure will be described in detail based on the following figures, wherein:
FIG. 1 is an enlarged cross-sectional view of main parts in a vehicle to which a vehicle lower body structure pertaining to a first embodiment has been applied;
FIG. 2 is an enlarged cross-sectional view of main parts in example modification 1 in the vehicle to which the vehicle lower body structure pertaining to the first embodiment has been applied;
FIG. 3 is an enlarged cross-sectional view of main parts in a vehicle to which a vehicle lower body structure pertaining to a second embodiment has been applied;
FIG. 4 is an enlarged cross-sectional view of main parts in a vehicle to which a vehicle lower body structure pertaining to a third embodiment has been applied; and
FIG. 5 is an enlarged cross-sectional view of main parts in example modification 1 in the vehicle to which the vehicle lower body structure pertaining to the third embodiment has been applied.

### DETAILED DESCRIPTION

Vehicle lower body structures pertaining to embodiments of the present disclosure will now be described using the drawings. It will be noted that arrow UP and arrow RH appropriately shown in the drawings respectively indicate an upward direction and a rightward direction of a vehicle to which the vehicle lower body structures pertaining to the embodiments have been applied. When description is given below simply using the directions of front/rear, left/right, and up/down, unless otherwise specified these shall mean front/rear in the vehicle front and rear direction, left/right in the vehicle left and right direction (vehicle width direction), and up/down in the vehicle up and down direction. Furthermore, in the drawings, illustrations of some members and some reference signs may be omitted to facilitate viewing of the drawings.

### <First Embodiment>

### (Configuration of Vehicle Lower Body Structure)

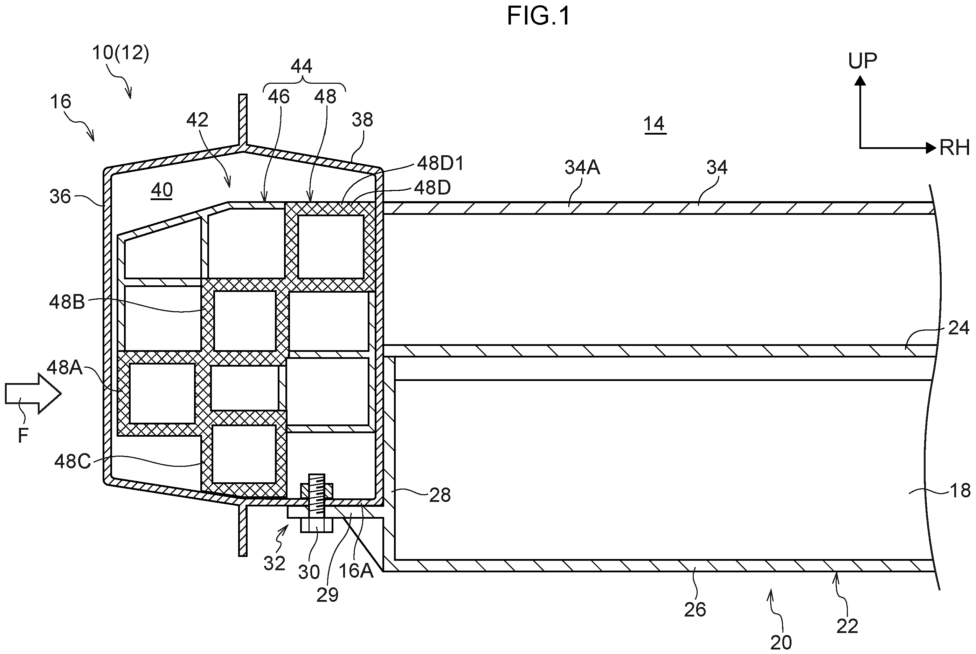

As shown in FIG. 1, a vehicle (vehicle body) 12 to which a vehicle lower body structure 10 pertaining to a first embodiment of the present disclosure has been applied includes a left and right pair of rockers 16 that configure a vehicle frame and extend along the vehicle front and rear direction on lower portions of both vehicle width direction ends of a cabin 14. Although the drawings do not show this, a front crossmember (not shown in the drawings) is provided along the vehicle width direction on front ends of the left and right pair of rockers 16, and a rear crossmember (not shown in the drawings) is provided along the vehicle width direction on rear ends of the left and right pair of rockers 16. Furthermore, the vehicle 12 pertaining to the present embodiment is a battery electric vehicle (BEV) that runs on the driving force of an electric motor (not shown in the drawings), and the lower portion of the vehicle 12 is provided with a battery pack (battery) 20 in which are housed plural battery cells 18 that supply driving power to the electric motor. It will be noted that the vehicle 12 may also be a plug-in hybrid electric vehicle (PHEV) or a fuel cell electric vehicle (FCEV).

Here, the configuration of the vehicle lower body structure 10 pertaining to the present embodiment will be described.

As shown in FIG. 1, the vehicle lower body structure 10 pertaining to the present embodiment includes the battery pack 20. The battery pack 20 is configured to include a box-shaped battery case 22 that comprises a light metal such as aluminum alloy for example, has the shape of a rectangle whose lengthwise direction coincides with the vehicle front and rear direction as viewed in a plan view, and whose upper side is open. It will be noted that in addition to metal a resin material such as carbon fiber-reinforced plastic (CFRP) or glass fiber-reinforced plastic (GFRP) for example may also be used for the battery case 22.

Furthermore, the battery case 22 is, for example, as viewed in a plan view in a state in which the plural battery cells 18 are housed therein, closed off by a cover 24 having the shape of a rectangular plate. The cover 24 comprises a light metal such as aluminum alloy for example, has the shape of a plate whose thickness direction coincides with the vehicle up and down direction, and is integrated with the battery case 22 by welding for example.

For example, the battery case 22 is configured to include a bottom wall 26 and a side wall 28 that extends vertically from the outer edge of the bottom wall 26. For example, a bracket 29 is integrally provided on the side wall 28, and the side wall 28 is fastened via the bracket 29 and fastening members 32 such as bolts 30 to a lower wall portion 16A of the rocker 16. Because of this, the battery case 22 is supported relative to the rocker 16. The cover 24 configures a floor that configures a floor inside the cabin 14, and on the cover 24 a floor crossmember (crossmember) 34 is provided along the vehicle width direction so as to bridge the left and right pair of rockers 16. It will be noted that although the drawings do not show this, the bottom wall 26 may extend outward in the vehicle width direction beyond the side wall 28, and the extended portion may be fastened as the bracket to the lower wall portion 16A of the rocker 16.

Furthermore, in the present embodiment, the rocker 16 is configured to include an outer member 36 and an inner member 38, and a closed cross-sectional part 40 is formed by the outer member 36 and the inner member 38. Inside the closed cross-sectional part 40 is provided (disposed) an EA member (impact absorption member) 42. The cross-sectional shape of the closed cross-sectional part 40 when the closed cross-sectional part 40 is cut along the vehicle width direction and the vehicle up and down direction is for example a substantially hexagonal shape, and the closed cross-sectional part 40 is formed in such a way that its dimension in the vehicle up and down direction is longer than its dimension in the vehicle width direction.

It will be noted that the cross-sectional shape of the closed cross-sectional part 40 is not particularly limited. Furthermore, although FIG. 1 shows the outer member 36 and the inner member 38 of the rocker 16 as being integrally formed, the outer member 36 and the inner member 38 may be formed by separate members and integrated by being joined to each other. Moreover, the EA member 42 may for example be bonded to the rocker 16 via a bonding member (not shown in the drawings) or be integrally formed with the rocker 16 by extrusion molding for example.

Here, in the present embodiment, the EA member 42 is configured by plural energy absorption portions 44 whose cross-sectional shapes when the energy absorption portions 44 are cut along the vehicle width direction and the vehicle up and down direction are substantially rectangular closed cross-sectional shapes. In the present embodiment, the energy absorption portions 44 are for example arranged 3×3 in a grid along the vehicle up and down direction and the vehicle width direction. However, the grid has a shape where, in the vehicle width direction central portion thereof, four energy absorption portions 44 are provided in the vehicle up and down direction in a state in which they project in the vehicle downward direction.

Furthermore, in the present embodiment, the thickness of the energy absorption portions 44 in the EA member 42 is partially changed. Specifically, in the present embodiment, the energy absorption portions 44 are configured to include energy absorption portions (other energy absorption portions) 46 indicated by hatching and energy absorption portions (first guide portions, second guide portions) 48 indicated by crosshatching.

The energy absorption portions (hereinafter called "high-rigidity portions") 48 are formed so that their thickness is thicker than that of the energy absorption portions 46, and the energy absorption portions 48 have a higher rigidity than the energy absorption portions 46. It will be noted that at the boundaries between the energy absorption portions 46 and the energy absorption portions 48, solid lines are drawn in the drawing in order to facilitate understanding.

A high-rigidity portion (first guide portion, second guide portion) 48A is disposed outward in the vehicle width direction in the EA member 42 and in the lower portion of the EA member 42. A high-rigidity portion (first guide portion) 48B is disposed in the center in the EA member 42 in the vehicle width direction and on the upper side of the high-rigidity portion 48A and is disposed in a position overlapping the floor crossmember 34 as viewed in a vehicle side view.

Furthermore, a high-rigidity portion (second guide portion) 48C is disposed in the center of the EA member 42 in the vehicle width direction and on the lower side of the high-rigidity portion 48A and is disposed in a position overlapping the fastening members 32 as viewed in a vehicle side view. Moreover, a high-rigidity portion (first guide portion) 48D is disposed inward in the vehicle width direction in the EA member 42 and on the upper side of the high-rigidity portion 48A and is disposed in a position overlapping the floor crossmember 34 as viewed in a vehicle side view.

Additionally, the high-rigidity portions 48A, 48C are disposed in positions overlapping the battery case 22 as viewed in a vehicle side view, and an upper wall portion 48D1 of the high-rigidity portion 48D and an upper wall portion 34A of the floor crossmember 34 are disposed in positions overlapping (substantially flush with) each other as viewed in a vehicle side view. It will be noted that the height direction positions of the upper wall portion 48D1 of the high-rigidity portion 48D and the upper wall portion 34A of the floor crossmember 34 need not invariably be flush with each other, and the upper wall portion 48D1 of the high-rigidity portion 48D may be disposed more upward than the upper wall portion 34A of the floor crossmember 34.

Furthermore, in the present embodiment, in the EA member 42 the high-rigidity portions 48B, 48D that have a higher rigidity than the energy absorption portions 46 are formed upward and inward in the vehicle width direction from the high-rigidity portion 48A. For this reason, at the time of a side impact to the vehicle 12, an impact load (side impact load) F input to the rocker 16 is absorbed by for example plastic deformation of the EA member 42 and is transmitted via the high-rigidity portion 48A, the high-rigidity portion 48B, and the high-rigidity portion 48D to the floor crossmember 34.

Moreover, in the present embodiment, the high-rigidity portion 48C that has a higher rigidity than the energy absorption portions 46 is formed downward and inward in the vehicle width direction from the high-rigidity portion 48A. For this reason, at the time of a side impact to the vehicle 12, the impact load F input to the rocker 16 is transmitted via the high-rigidity portion 48A and the high-rigidity portion 48C to the fastening members 32.

In other words, in the present embodiment, the impact load F can be transmitted via the high-rigidity portion 48A, the high-rigidity portion 48B, and the high-rigidity portion 48D to the floor crossmember 34 and also transmitted via the high-rigidity portion 48C to the fastening members 32.

It will be noted that in the present embodiment, in the EA member 42 the rigidity of the high-rigidity portions 48 is made higher than that of the energy absorption portions 46 by making the thickness of the high-rigidity portions 48 thicker than that of the energy absorption portions 46. However, the high-rigidity portions 48 are not limited to this because their rigidity need only be higher than that of the energy absorption portions 46.

For example, a material that has a higher rigidity than that of the energy absorption portions 46 may be used for the high-rigidity portions 48 and the two may be integrated, and/or the high-rigidity portions 48 may be provided with reinforcement portions such as braces to give them triangular shapes relative to the energy absorption portions 46, or the shape of the high-rigidity portions 48 may be changed to a hexagonal shape for example. Moreover, reinforcement members may also be used in the energy absorption portions 46. Furthermore, the shape of the energy absorption portions 46 themselves are also not limited to being substantially rectangular and may also be triangular or hexagonal. It will be noted that the same also holds true in later-described other embodiments as it does in the present embodiment.

### (Action and Effects of Vehicle Lower Body Structure)

Next, the action and effects of the vehicle lower body structure pertaining to the present embodiment will be described.

As shown in FIG. 1, in the present embodiment, the vehicle lower body structure 10 includes the left and right pair of rockers 16, the floor crossmember 34, and the EA member 42. The left and right pair of rockers 16 extend in the vehicle front and rear direction on both outer sides in the vehicle width direction, the floor crossmember 34 is provided between the pair of rockers 16, and both end portions of the floor crossmember 34 are connected to the left and right pair of rockers 16.

The EA member 42 is provided inside each of the left and right pair of rockers 16 and is provided so as to overlap the floor crossmember 34 and the battery pack 20 as viewed in a vehicle side view. For this reason, the impact load F input from outside in the vehicle width direction is reduced by the EA member 42.

Here, in the present embodiment, part of the EA member 42 is provided with the high-rigidity portions 48 including the first guide portions that guide to the floor crossmember 34 the impact load F input from outside in the vehicle width direction and the second guide portions that guide the impact load F to the fastening members 32. By increasing with the high-rigidity portions 48 the efficiency with which the impact load F is transmitted, the impact load F can be guided in predetermined directions inward in the vehicle width direction. In other words, in the present embodiment, the load transmission direction can be controlled.

Specifically, in the present embodiment, the EA member 42 is configured to include the plural energy absorption portions 44 that are arranged along the vehicle up and down direction and the vehicle width direction. The high-rigidity portions 48 configuring some of the energy absorption portions 44 are formed so that their thickness is thicker than that of the other energy absorption portions 46, and the high-rigidity portions 48 have a higher rigidity than the energy absorption portions 46.

In this way, in the present embodiment, by making the rigidity of some energy absorption portions (the high-rigidity portions 48) of the same energy absorption portions 44 higher as so-called guide portions than that of the other energy absorption portions 46, the impact load F can be transmitted, and the transmission direction of the impact load F can be controlled. Because of this, in the present embodiment, the battery pack 20 can be protected.

It will be noted that in the present embodiment, the rigidity of the guide portions is made higher by making the thickness of the guide portions thicker than that of the other energy absorption portions 46, so compared with a case where members with a high rigidity are integrated with the EA member 42, the number of manhours is reduced, and costs can be reduced.

Furthermore, in the present embodiment, the cross-sectional shapes of the energy absorption portions 44 when the energy absorption portions 44 are cut along the vehicle width direction are closed cross-sectional shapes, a high rigidity can be obtained by the EA member 42 itself compared with a case where the cross-sectional shapes are open cross-sectional shapes, and the amount of impact energy absorbed by plastic deformation can be increased all the more.

Moreover, in the present embodiment, the high-rigidity portions 48 are configured to include the high-rigidity portions 48A, 48B, 48D serving as first guide portions, and the impact load F input from outside in the vehicle width direction can be guided by the high-rigidity portions 48 to the floor crossmember 34. Because the high-rigidity portions 48A, 48B, 48D control the load transmission direction to the floor crossmember 34 in this way, the impact load F that has been input can be guided to the upper portion side of the rocker 16.

Additionally, because the impact load F is guided by the first guide portions to the floor crossmember 34 provided on the vehicle upper side of the battery pack 20, in the present embodiment, the impact load input to the battery pack 20 becomes relatively smaller, with the result that the battery pack 20 can be protected.

Furthermore, in the present embodiment, the battery pack 20 is fastened via the fastening members 32 to the rocker 16. The high-rigidity portions 48 are configured to include the high-rigidity portions 48A, 48C serving as second guide portions, and the fastening members 32 have a high rigidity, so the impact load F input from outside in the vehicle width direction can be guided by the high-rigidity portions 48A, 48C to the fastening members 32.

Consequently, in the present embodiment, the impact load F is guided by the high-rigidity portions 48A, 48B, 48D to the floor crossmember 34 and is also guided by the high-rigidity portions 48A, 48C to the fastening members 32 that have a high rigidity. That is, in the present embodiment, the impact load F is transmitted toward the upper portion side and the lower portion side of the rocker 16, so the impact energy can be absorbed in a balanced fashion by the rocker 16 overall, with the result that the yield strength of the rocker 16 itself can be improved.

Furthermore, in the present embodiment, the upper wall portion 48D1 of the high-rigidity portion 48D and the upper wall portion 34A of the floor crossmember 34 are disposed in positions overlapping each other as viewed in a vehicle side view, and the impact load F that has been guided to the high-rigidity portion 48C can be reliably transmitted to the floor crossmember 34. Because of this, the impact load F can be transmitted via the floor crossmember 34 to the rocker on the opposite side of the rocker to which the impact load F was input, and the impact load F can be dispersed.

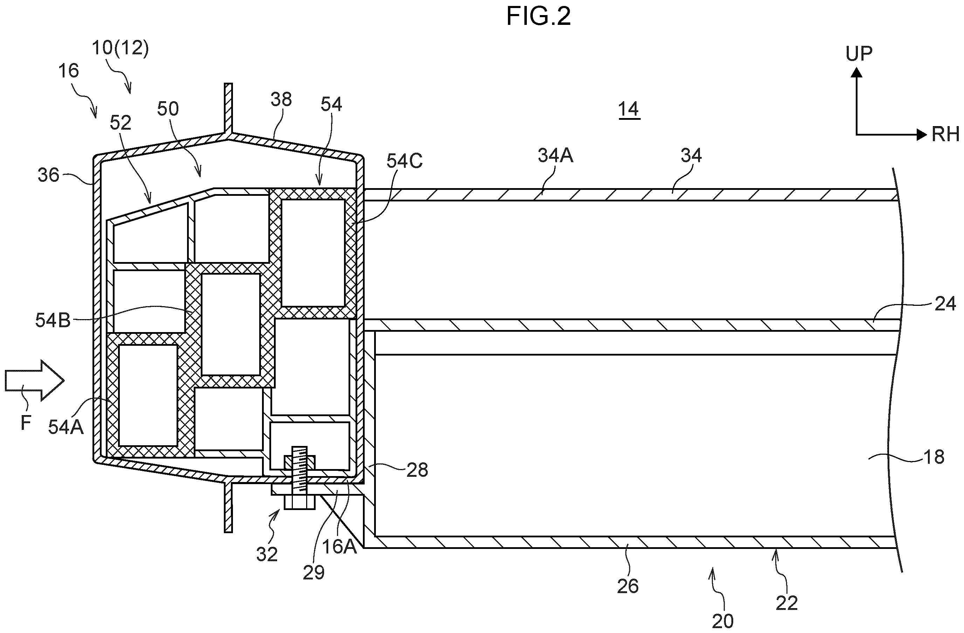

It will be noted that the shapes in the present embodiment are not particularly limited. For example, as example modification 1, as shown in FIG. 2, in an EA member 50, among high-rigidity portions (first guide portions) 54 that have a higher rigidity than other energy absorption portions 52, a high-rigidity portion 54A and a high-rigidity portion 54B that are adjacent to each other in the vehicle width direction overlap each other in the vehicle up and down direction, and the high-rigidity portion 54B and a high-rigidity portion 54C that are adjacent to each other in the vehicle width direction overlap each other in the vehicle up and down direction.

In this example modification 1, the high-rigidity portion 54A and the lower portion of the high-rigidity portion 54B are disposed in positions overlapping the battery case 22 as viewed in a vehicle side view, and the upper portion of the high-rigidity portion 54B and the high-rigidity portion 54C are disposed in positions overlapping the floor crossmember 34 as viewed in a vehicle side view. Furthermore, an upper wall portion 54C1 of the high-rigidity portion 54C and the upper wall portion 34A of the floor crossmember 34 are disposed in positions overlapping each other as viewed in a vehicle side view.

In this way, in example modification 1, the high-rigidity portions that are adjacent to each other in the vehicle width direction overlap each other in the vehicle up and down direction, so the rigidity of the high-rigidity portions 54A, 54B, 54C themselves is improved over that of the high-rigidity portions 48A, 48B, 48D shown in FIG. 1, the efficiency with which the impact load F input along the vehicle width direction in the overlapping range is transmitted improves, and the impact load can be more effectively transmitted.

### <Second Embodiment>

In the first embodiment described above, for example, as shown in FIG. 1, the EA member (impact absorption member) 42 disposed inside the closed cross-sectional part 40 is configured by the plural energy absorption portions 44 whose cross-sectional shapes when the energy absorption portions 44 are cut along the vehicle width direction and the vehicle up and down direction are substantially rectangular closed cross-sectional shapes.

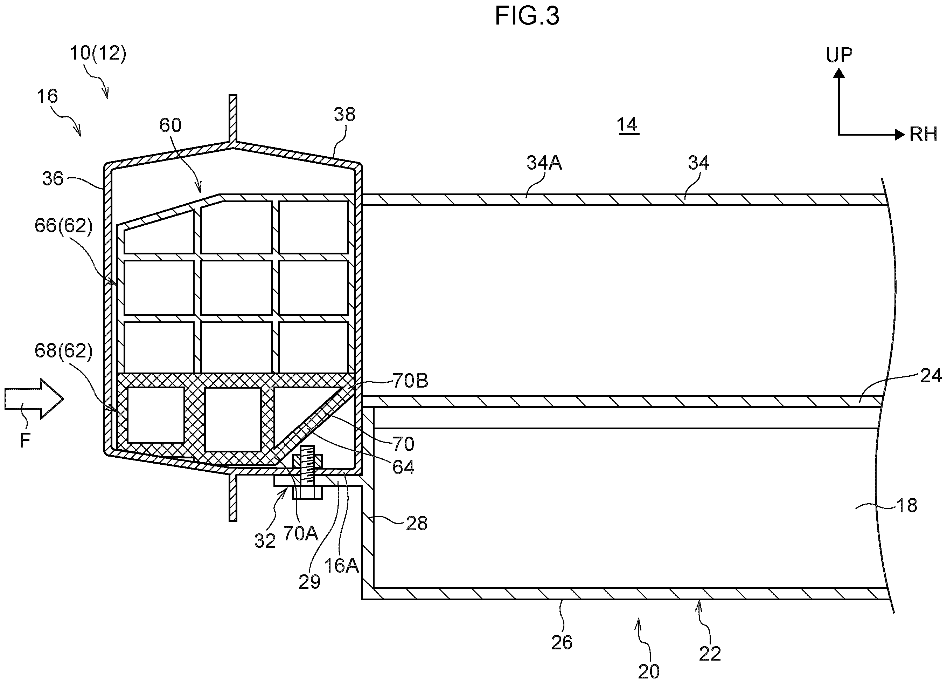

In contrast, in a second embodiment, the shape of part of the EA member differs greatly from that of the other energy absorption portions. For example, as shown in FIG. 3, an EA member 60 is configured to include plural energy absorption portions 62 in which the cross-sectional shapes are substantially rectangular and an energy absorption portion 64 in which the cross-sectional shape is triangular. It will be noted that description in regard to content that is the same as that of the first embodiment will be omitted.

In the present embodiment, of the plural energy absorption portions 62, high-rigidity portions (second guide portions) 68 that have a higher rigidity than other energy absorption portions 66 are provided in the lower portion of the EA member 60 and are disposed in positions overlapping the battery case 22 as viewed in a vehicle side view. The impact load F input from outside in the vehicle width direction can be guided by the high-rigidity portions 68 to the fastening members 32. In the present embodiment, because the impact load F is guided via the high-rigidity portions 68 to the fastening members 32, the impact load F input to the battery pack 20 can be reduced.

Furthermore, in the present embodiment, the energy absorption portion (first guide portion) 64 is provided on the vehicle width direction inner side of the high-rigidity portions 68. The energy absorption portion 64 is disposed on the upper side of the fastening members 32 and is configured to include a sloping portion (first guide portion) 70 that slopes in the vehicle upward direction and inward in the vehicle width direction.

For this reason, the impact load F can be transmitted via the sloping portion 70 toward the floor crossmember 34. Additionally, providing the sloping portion 70 increases the flexibility of control over the load transmission direction, in other words, design flexibility. Here, in the present embodiment, an outer end portion 70A of the sloping portion 70 is provided more outward in the vehicle width direction than the fastening members 32, and an inner end portion 70B of the sloping portion 70 is provided more in the vehicle upward direction than the fastening members 32. Because of this, in the present embodiment, the impact load F can be kept from being transmitted inward in the vehicle width direction beyond the fastening members 32, and the battery pack 20 can be protected.

### <Third Embodiment>

In the first embodiment described above, as shown in FIG. 1, there are provided the high-rigidity portions 48 whose rigidity is made higher by for example changing the thickness of some energy absorption portions among the plural energy absorption portions 44 configuring the EA member 42 inside the closed cross-sectional part 40, the efficiency with which the impact load F is transmitted can be increased via the high-rigidity portions 48, and the impact load F can be guided in predetermined directions inward in the vehicle width direction.

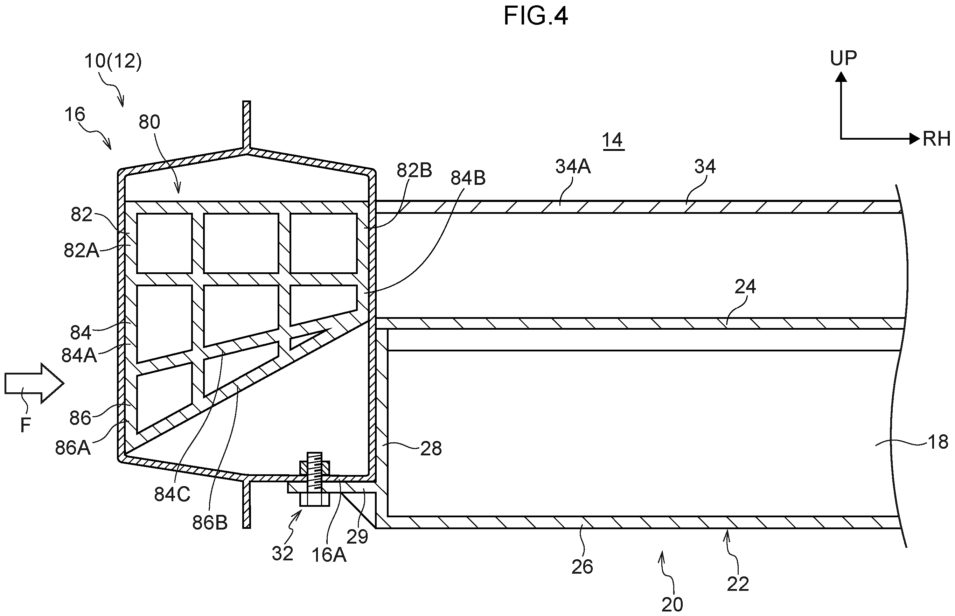

In contrast, in a third embodiment, as shown in FIG. 4, an EA member 80 itself has a shape by which the impact load F can be guided in a predetermined direction. Specifically, in the present embodiment, the EA member 80 is configured to include an upper-level portion 82, a middle-level portion 84, and a lower-level portion 86 along the vehicle up and down direction.

In the present embodiment, the upper-level portion 82 has an outer wall portion 82A positioned outward in the vehicle width direction and an inner wall portion 82B positioned inward in the vehicle width direction, and the outer wall portion 82A and the inner wall portion 82B are set to substantially the same length so that the upper-level portion 82 has a rectangular shape. The middle-level portion 84 has an outer wall portion 84A and an inner wall portion 84B, and the inner wall portion 84B is formed shorter than the outer wall portion 84A so that the middle-level portion 84 has a trapezoidal shape. For this reason, a lower wall portion (sloping portion) 84C of the middle-level portion 84 slopes upward and inward in the vehicle width direction. Furthermore, the lower-level portion 86 has a triangular shape whose apex is located at the intersection with the inner wall portion 84B positioned inward in the vehicle width direction, and a lower wall portion (sloping portion) 86B of the lower-level portion 86 configures a lower wall portion of the EA member 80 and slopes upward and inward in the vehicle width direction.

In the present embodiment, the outer wall portion 82A of the upper-level portion 82 and the upper portion of the outer wall portion 84A of the middle-level portion 84 are disposed in positions overlapping the floor crossmember 34 as viewed in a vehicle side view, and the lower portion of the outer wall portion 84A of the middle-level portion 84 and an outer wall portion 86A of the lower-level portion 86 are disposed in positions overlapping the battery case 22 as viewed in a vehicle side view.

Furthermore, the inner wall portion 82B of the upper-level portion 82 and the inner wall portion 84B of the middle-level portion 84 are disposed in positions overlapping the floor crossmember 34 as viewed in a vehicle side view, and the lower-level portion 86 includes the lower wall portion 86B. For this reason, the impact load F can be transmitted via the upper-level portion 82 and the middle-level portion 84 from outside in the vehicle width direction to the floor crossmember 34 disposed inward in the vehicle width direction and can be transmitted via the lower wall portion 84C of the middle-level portion 84 and the lower wall portion 86B of the lower-level portion 86 to the floor crossmember 34. Because of this, in the present embodiment, the battery pack 20 can be protected.

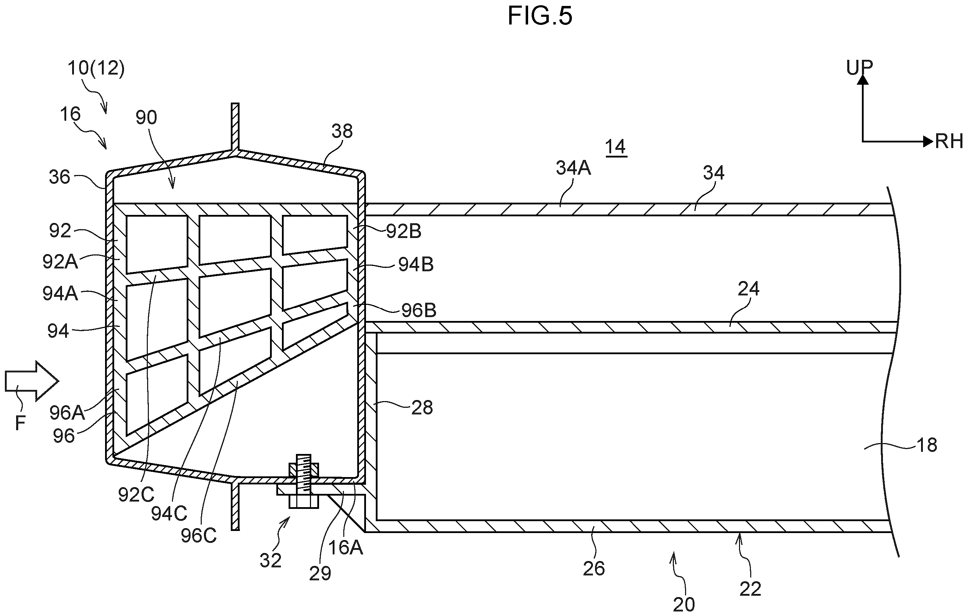

It will be noted that the present embodiment is not limited to this. For example, as example modification 1, as shown in FIG. 5, in an EA member 90, an outer wall portion 92A of an upper-level portion 92 and an outer wall portion 94A of a middle-level portion 94 are disposed in positions overlapping the floor crossmember 34 as viewed in a vehicle side view, and an outer wall portion 96A of a lower-level portion 96 is disposed in a position overlapping the battery case 22 as viewed in a vehicle side view.

Furthermore, the upper-level portion 92, the middle-level portion 94, and the lower-level portion 96 may have trapezoidal shapes in which inner wall portions 92B, 94B, 96B thereof are formed shorter than the outer wall portions 92A, 94A, 96A. Because of this, a lower wall portion (sloping portion) 92C of the upper-level portion 92, a lower wall portion (sloping portion) 94C of the middle-level portion 94, and a lower wall portion (sloping portion) 96C of the lower-level portion 96 are each formed so as to slope inward in the vehicle width direction toward the floor crossmember 34 positioned in the upward direction.

Additionally, in example modification 1, the outer wall portion 92A of the upper-level portion 92 and the upper portion of the outer wall portion 94A of the middle-level portion 94 are disposed in positions overlapping the floor crossmember 34 as viewed in a vehicle side view, and the lower portion of the outer wall portion 94A of the middle-level portion 94 and the outer wall portion 96A of the lower-level portion 96 are disposed in positions overlapping the battery case 22 as viewed in a vehicle side view. Furthermore, the inner wall portion 92B of the upper-level portion 92, the inner wall portion 94B of the middle-level portion 94, and the inner wall portion 96B of the lower-level portion 96 are disposed in positions overlapping the floor crossmember 34 as viewed in a vehicle side view.

For this reason, in the present embodiment, the impact load F can be transmitted via the upper-level portion 92, the middle-level portion 94, and the lower-level portion 96 to the floor crossmember 34 and can be transmitted via the lower wall portion 92C of the upper-level portion 92, the lower wall portion 94C of the middle-level portion 94, and the lower wall portion 96C of the lower-level portion 96 to the floor crossmember 34.

### <Supplementary Notes>

It will be noted that the following configurations may be combined as appropriate to configure the vehicle lower body structure pertaining to the present disclosure.

### (Configuration 1)

A vehicle lower body structure includes: a pair of rockers that extend in a vehicle front_ rear direction at both vehicle width direction outer sides; a crossmember that extends in a vehicle width direction between the pair of rockers and at a vehicle upper side of a battery connected to the pair of rockers, with extension direction end portions of the crossmember being respectively connected to the pair of rockers; and an impact absorption member that is provided inside each of the pair of rockers, that is disposed so as to overlap the crossmember and the battery as viewed in a vehicle side view, and that is provided with first guide portions that guide, to the crossmember an impact load input from a vehicle width direction outer side.

### (Configuration 2)

The impact absorption member includes plural energy absorption portions that are arranged along a vehicle up-down direction and the vehicle width direction and that are configured to absorb impact energy by plastic deformation, and the first guide portions are configured by some of the energy absorption portions.

### (Configuration 3)

Cross-sectional shapes of the energy absorption portions when the energy absorption portions are cut along the vehicle width direction are closed cross-sectional shapes.

### (Configuration 4)

The energy absorption portions configuring the first guide portions have a higher rigidity than other energy absorption portions.

### (Configuration 5)

The battery is fastened, via fastening members, to the pair of rockers, and the impact absorption member includes second guide portions that guide the impact load to the fastening members.

### (Configuration 6)

Energy absorption portions configuring the second guide portions have a higher rigidity than other energy absorption portions excluding energy absorption portions configuring the first guide portions.

### (Configuration 7)

Among energy absorption portions configuring the first guide portions, an energy absorption portion provided at a vehicle width direction inner side is disposed further toward a vehicle upper side than an energy absorption portion provided at the vehicle width direction.

### (Configuration 8)

Among the first guide portions, at least some of the energy absorption portions that are adjacent to each other in the vehicle width direction overlap each other in the vehicle up-down direction.

### (Configuration 9)

The first guide portions include a sloping portion that slopes towards a vehicle upper side and a vehicle width direction inner side.

### (Configuration 10)

An outer end portion at a vehicle width direction outer side of the sloping portion is provided further toward the vehicle width direction outer side than the fastening members fastened to the pair of rockers, and an inner end portion at a vehicle width direction inner side of the sloping portion is provided further toward the vehicle upper side than the fastening members.

In addition, the present disclosure can be changed and implemented in various ways without departing from the spirit thereof. Furthermore, the scope of rights of the present disclosure is of course not limited to the above embodiments.

## Claims

1. A vehicle lower body structure (10), comprising:
a pair of rockers (16) that extend in a vehicle front-rear direction at both vehicle width direction outer sides;
a crossmember (34) that extends in a vehicle width direction between the pair of rockers and at a vehicle upper side of a battery (20) connected to the pair of rockers, with extension direction end portions of the crossmember being respectively connected to the pair of rockers; and
an impact absorption member (42,50,60,80,90) that is provided inside each of the pair of rockers, that is disposed so as to overlap the crossmember and the battery as viewed in a vehicle side view, and that is provided with first guide portions (48,54,64,82,84,92,94,96) that guide, to the crossmember, an impact load input from a vehicle width direction outer side.

2. The vehicle lower body structure of claim 1, wherein the impact absorption member includes plural energy absorption portions (44,46,52,62,64) that are arranged along a vehicle up-down direction and the vehicle width direction and that are configured to absorb impact energy by plastic deformation, and the first guide portions are configured by some of the energy absorption portions.

3. The vehicle lower body structure of claim 2, wherein cross-sectional shapes of the energy absorption portions when the energy absorption portions are cut along the vehicle width direction are closed cross-sectional shapes.

4. The vehicle lower body structure of claim 2 or 3, wherein energy absorption portions (44,64) configuring the first guide portions have a higher rigidity than other energy absorption portions (46,66).

5. The vehicle lower body structure of any one of claims 1 to 4, wherein:
the battery is fastened, via fastening members (32), to the pair of rockers, and
the impact absorption member includes second guide portions (48,68) that guide the impact load to the fastening members.

6. The vehicle lower body structure of claim 5, wherein energy absorption portions configuring the second guide portions have a higher rigidity than other energy absorption portions excluding energy absorption portions configuring the first guide portions.

7. The vehicle lower body structure of any one of claims 1 to 6, taken in combination with claim 2, wherein, among energy absorption portions configuring the first guide portions, an energy absorption portion provided at a vehicle width direction inner side is disposed further toward a vehicle upper side than an energy absorption portion provided at the vehicle width direction outer side.

8. The vehicle lower body structure of any one of claims 1 to 7, taken in combination with claim 2, wherein among the first guide portions, at least some of the energy absorption portions that are adjacent to each other in the vehicle width direction overlap each other in the vehicle up-down direction.

9. The vehicle lower body structure of any one of claims 1 to 8, wherein the first guide portions include a sloping portion (84C,86C,92C,94C,96C) that slopes towards a vehicle upper side and a vehicle width direction inner side.

10. The vehicle lower body structure of claim 9, wherein an outer end portion at a vehicle width direction outer side of the sloping portion is provided further toward the vehicle width direction outer side than fastening members fastened to the pair of rockers, and an inner end portion at a vehicle width direction inner side of the sloping portion is provided further toward the vehicle upper side than the fastening members.
